# EUROPÄISCHE PATENTANMELDUNG

(11) **EP 4 836 255 A2**
(43) Veröffentlichungstag der Anmeldung: **04.11.2026**
(21) Anmeldenummer: 26206486.8
(22) Anmeldetag: 07.11.2022
(51) Int. Cl.: H02K 7/14

(54) **PUMPE-MOTOR-EINHEIT MIT ZENTRIERTEM STATOR**

(30) Priorität: 18.11.2021 DE 102021130216
(62) Dokumentnummer(n) der früheren Anmeldung(en) nach Art. 76 EPÜ: 22205901.6 / 4 184 761
(71) Anmelder: Schwäbische Hüttenwerke Automotive GmbH, 73433 Aalen (DE)
(72) Erfinder: BRAASCH, Holger, 88630 Pfullendorf (DE); FINSTERLE, Thomas, 88212 Ravensburg (DE)
(74) Vertreter: SSM Sandmair

(57) **Zusammenfassung**

Pumpe-Motor-Einheit mit einer Gehäusestruktur, einem darin drehbaren Förderrad in einem Pumpenraum und einem elektrischen Antriebsmotor in einem sich rampenförmig verengendem Motorraum, wobei der Antriebsmotor einen Stator und Rotor aufweist. Beide Räume werden radial durch entsprechende Gehäuseabschnitte begrenzt. Das Gehäuse weist ferner einen Gehäuse-Zentrierabschnitt auf, der eine Stator-Zentrierstruktur in einem Zentriereingriff mit Passung umgibt und den Stator bezüglich der Drehachse zentriert. Ein eingesetzter Pumpenraum-Deckel bildet eine Stirnwand des Pumpenraums aus. Ein weiterer Gehäuse-Zentrierabschnitt verengt den Motorraum in Richtung der Gehäuse-Stirnwand und umgibt den Pumpenraum-Deckel ebenfalls mit Passung, wodurch der Pumpenraum-Deckel zur Drehachse zentriert wird.

## Beschreibung

Die Erfindung betrifft eine Pumpe-Motor-Einheit, die ein Förderrad zur Förderung eines Fluids und einen elektrischen Antriebsmotor für einen Antrieb des Förderrads umfasst, wobei das Förderrad und der Elektromotor in einem gemeinsamen Gehäuse angeordnet sind. Die Pumpe-Motor-Einheit kann insbesondere zur Förderung eines hydraulischen Fluids, beispielsweise eines Getriebeöls und/oder eines Schmieröls und/oder einer Kühlflüssigkeit und/oder einer Arbeitsflüssigkeit, eingerichtet sein. Bevorzugt ist sie in einem Fahrzeug eingebaut oder für den Einbau in einem Fahrzeug eingerichtet. Die Pumpe-Motor-Einheit kann beispielsweise für eine Verwendung als Schmiermittel- und/oder Kühlmittelpumpe zur Schmierung und/oder Kühlung eines Antriebsmotors eines Fahrzeugs und/oder als Getriebepumpe zur Beölung (Schmierung und/oder Kühlung und/oder Betätigung) eines Fahrzeuggetriebes, beispielsweise eines Automatik- oder Schaltgetriebes, und/oder zur Versorgung einer Fahrzeugkupplung eingerichtet sein.

Die Pumpe-Motor-Einheit eignet sich insbesondere zur Schmierung und/oder Kühlung und/oder Betätigung einer sogenannten E-Achse eines elektrifizierten Fahrzeugs, also eines Fahrzeugs, das von einem Elektromotor angetrieben wird, sei es als reines Elektrofahrzeug oder als Hybridfahrzeug. Die E-Achse kombiniert Elektromotor, Getriebe und Leistungselektronik in einer Antriebseinheit, welche die Fahrzeugachse antreibt. Die Komplexität des Antriebs wird reduziert und der Antriebsstrang kompakter, insbesondere in Ausführungen, in denen die E-Achse unbeweglich mit der Fahrzeugachse verbunden ist.

Aus der WO 2015/197161 A1 ist eine Pumpe-Motor-Einheit bekannt, deren Gehäuse einen Pumpenraum mit einem Förderrad und einen Motorraum aufweist, in dem ein elektrischer Antriebsmotor für das Förderrad aufgenommen ist. Der Stator des Antriebsmotors ist axial bis gegen einen Anschlag des Gehäuses in den Motorraum eingeschoben. Spezielle Maßnahmen zur Zentrierung des Stators werden nicht offenbart.

Die WO 2020/098494 A1 betrifft ein Radnabenmotor-Antriebssystem mit einem Gehäuse, in dem ein elektrischer Antriebsmotor und ein damit gekoppeltes Planetengetriebe aufgenommen sind. Die Abtriebswelle des Systems ragt seitlich aus dem Gehäuse und kann direkt mit einem vom Antriebssystem anzutreibenden Rad eines Kraftfahrzeugs gekoppelt werden. Spezielle Maßnahmen zur Zentrierung des elektrischen Antriebsmotors, insbesondere zur Zentrierung des Stators, werden nicht offenbart.

Die Offenlegungsschrift US 2003/0070879 A1 beschreibt eine Flüssigkeitspumpe mit einem Stator und einer einen Rotor umfassenden Ankerbaugruppe. Der Stator und die Ankerbaugruppe bilden eine selbstzentrierenden Anordnung, wobei sich die Ankerbaugruppe im Stator 34 und entlang einer axialen Richtung zentriert.

Eine Aufgabe der Erfindung besteht darin, Pumpe-Motor-Einheiten der genannten Art zu verbessern, so dass Komponenten der jeweiligen Pumpe-Motor-Einheit auf einem Montageautomaten einfach und schnell, aber dennoch zueinander lagegenau zusammengebaut werden können.

Gegenstand der Erfindung ist eine Pumpe-Motor-Einheit, die eine Gehäusestruktur, ein Förderrad und einen elektrischen Antriebsmotor (Elektromotor) für einen Drehantrieb des Förderrads umfasst. Die Gehäusestruktur umgibt einen Pumpenraum und einen in axialer Flucht mit dem Pumpenraum gelegenen Motorraum. Das Förderrad ist zur Förderung eines Fluids drehbar im Pumpenraum aufgenommen. Der elektrische Antriebsmotor ist im Motorraum aufgenommen und umfasst einen um eine Drehachse drehbaren Rotor und einen Stator. Der Rotor und/oder der Stator weist oder weisen jeweils elektrische Spulen auf. Bevorzugt weist zumindest der Stator elektrische Spulen auf. Die Pumpe-Motor-Einheit umfasst ferner eine Antriebswelle, die das Förderrad für den Drehantrieb mit dem Rotor des elektrischen Antriebsmotors koppelt. Die Antriebswelle kann das Förderrad und den Rotor des Antriebsmotors indirekt, das heißt über ein oder mehrere Übertragungsglieder koppeln. Bevorzugter koppelt die Antriebswelle das Förderrad und den Rotor direkt, indem sowohl das Förderrad als auch der Rotor drehunbeweglich mit der Antriebswelle verbunden, zweckmäßigerweise jeweils unmittelbar mit der Antriebswelle drehunbeweglich gefügt sind.

Die Gehäusestruktur weist einen den Pumpenraum radial begrenzenden Pumpenraum-Abschnitt, eine stirnseitige Motorraum-Öffnung, einen den Motorraum radial begrenzenden Motorraum-Abschnitt und axial zwischen dem Pumpenraum-Abschnitt und dem Motorraum-Abschnitt einen den Motorraum ebenfalls radial begrenzenden Gehäuse-Zentrierabschnitt auf. Der Rotor und der Stator sind beim Zusammenbau der Pumpe-Motor-Einheit axial durch die Motorraum-Öffnung hindurch in den Motorraum einführbar und im Motorraum positionierbar. Der Gehäuse-Zentrierabschnitt und der Motorraum-Abschnitt liegen axial nebeneinander und umgeben den Stator. Der Motorraum-Abschnitt liegt in Bezug auf den Zusammenbau im Vergleich mit dem Gehäuse-Zentrierabschnitt axial aufwärtig, der Motorraum-Öffnung näher.

Der Stator weist eine Stator-Zentrierstruktur auf, die an den Gehäuse-Zentrierabschnitt geometrisch angepasst ist, um den Stator im Motorraum in Bezug auf die Drehachse des Rotors im Zusammenwirken mit dem Gehäuse-Zentrierabschnitt zu zentrieren.

Der Motorraum verengt sich vom aufwärtigen Motorraum-Abschnitt auf den Gehäuse-Zentrierabschnitt. Von der Motorraum-Öffnung in Richtung auf den Pumpenraum schließen sich die Verengung unmittelbar an den aufwärtigen Motorraum-Abschnitt und der Gehäuse-Zentrierabschnitt unmittelbar an die Verengung an. Zur Zentrierung des Stators überlappt der Gehäuse-Zentrierabschnitt mit der Stator-Zentrierstruktur axial. Im Bereich der axialen Überlappung umgibt der Gehäuse-Zentrierabschnitt die Stator-Zentrierstruktur mit Passung, so dass der Stator im Zusammenwirken von Stator-Zentrierstruktur und Gehäuse-Zentrierabschnitt in Bezug auf die Drehachse des Rotors des Antriebsmotors zentriert wird.

Aufgrund der Verengung des Motorraums vom aufwärtigen Motorraum-Abschnitt auf den Gehäuse-Zentrierabschnitt, wobei der Gehäuse-Zentrierabschnitt nur einen axialen Teilabschnitt des Stators umgibt und diesen Teilabschnitt im Kontakt mit der Stator-Zentrierstruktur mit Passung einfasst, wird eine im Vergleich mit der radialen Weite und/oder der axialen Länge des Stators kurze, der Zentrierung dienende axiale Überlappung erhalten. Über diese Axialüberlappung befinden sich ein Zentrier-Innenumfang des Gehäuse-Zentrierabschnitts und ein Zentrier-Außenumfang der Stator-Zentrierstruktur in der für die Zentrierung ausreichend engen Passung. Über die Länge der axialen Überlappung mit Passung besteht ein Zentriereingriff. Die Länge des Zentriereingriffs ist vorzugsweise höchstens 20% oder höchstens 10% der axialen Länge, über die sich die Spulen des Antriebsmotors erstrecken. Weist der Stator Spulen auf, ist die Länge des Zentriereingriffs vorzugsweise höchstens 20% oder höchstens 10% der axialen Länge, über die sich die Spulen des Stators erstrecken.

Der Gehäuse-Zentrierabschnitt und die Stator-Zentrierstruktur sind über die axiale Länge der zentrierenden Passung in vorteilhaften Ausführungen zylindrisch. Sie können über die axiale Länge der zentrierenden Passung insbesondere je kreiszylindrisch sein.

Vorteilhaft ist, wenn der Gehäuse-Zentrierabschnitt den Stator im Bereich der Stator-Zentrierstruktur in einem engen Gleitkontakt verschieblich führt. Der Zentrier-Innenumfang des Gehäuse-Zentrierabschnitts und der Zentrier-Außenumfang der Stator-Zentrierstruktur können im Bereich der Passung insbesondere so gewählt sein, dass der Stator und die Gehäusestruktur in der Passung ein geringes, vorzugsweise taktil nicht merkliches Spiel aufweisen. Andererseits kann die Passung aber auch so gewählt sein, dass zwischen dem Gehäuse-Zentrierabschnitt und der Stator-Zentrierstruktur ein Reibschluss besteht, allerdings nur mit geringer Kraft, so dass der Stator mit entsprechend geringer Axialkraft axial in und aus der Passung bewegt werden kann.

Die axiale Länge der Überlappung mit zentrierender Passung kann kurz sein und nur einen Bruchteil einer radialen Weite, vorzugsweise eines Durchmessers, des Zentrier-Außenumfangs der Stator-Zentrierstruktur ausmachen, wie dies bevorzugt wird. Für die Montage ist es vorteilhaft, wenn der Stator im Bereich der Passung von Gehäuse-Zentrierabschnitt und Stator-Zentrierstruktur kippsicher gehalten ist, wenn die Motorraum-Öffnung bei der Montage nach oben zeigt und die Drehachse des Rotors, die insbesondere zugleich auch eine Hauptmontageachse sein kann, lotrecht steht. Noch bevorzugter wird der Stator im Bereich der Passung auch dann kippsicher gehalten, wenn die Motorraum-Öffnung zur Seite weist und sich die Drehachse des Rotors horizontal oder mit einem spitzen Winkel zur Horizontalen erstreckt. In vorteilhaften Ausführungen sind die Passung so eng und die axiale Überlappungslänge so groß, vorzugsweise gerade so groß, dass Kippbewegungen des Stators relativ zur Gehäusestruktur in einem der einfachen Montage förderlichen Ausmaß entgegengewirkt wird. So kann die zentrierende Passung axial und radial insbesondere so bemessen sein, dass der Stator bei horizontaler Ausrichtung der Drehachse allein im Zusammenwirken von Stator-Zentrierstruktur und Gehäuse-Zentrierabschnitt in der zentrierten Position zumindest dann gehalten wird, wenn nur sein eigenes Gewicht wirkt.

In vorteilhaften Ausführungen überlappen der Gehäuse-Zentrierabschnitt und die Stator-Zentrierstruktur in der Passung über eine axiale Länge von höchstens 10% oder höchstens 5% einer größten radialen Weite des Zentrier-Außenumfangs der Stator-Zentrierstruktur und/oder weniger als 20% oder weniger als 10% einer axial über alles gemessenen Gesamtlänge des Stators.

Außerhalb der Passung ist der Stator vorzugsweise überall schlanker als in der Passung. Denkt man sich bei derartiger Ausführung des Stators den Innenumfang des Gehäuse-Zentrierabschnitts axial gerade und knickfrei kontinuierlich verlängert, umhüllt der virtuell verlängerte Innenumfang den Stator und kann insbesondere eine Einhüllende, das heißt eine am Zentrier-Außenumfang der Stator-Zentrierstruktur überall anliegende Einhüllende sein.

Die Passung von Gehäuse-Zentrierabschnitt und Stator-Zentrierstruktur kann eine Spielpassung mit höchstens geringem Spiel oder eine Übergangspassung sein. Bei Ausführung als Übergangspassung ist diese vorteilhafterweise so gewählt, dass der Stator mit höchstens geringer Axialkraft in und aus der Passung bewegt werden kann. Weisen der Gehäuse-Zentrierabschnitt in der Passung eine radial zur Drehachse gemessene Innenweite und die Stator-Zentrierstruktur in der Passung eine radial zur Drehachse gemessene Außenweite auf, gilt in zweckmäßigen Ausführungen, dass die Innenweite größer oder gleich der Außenweite ist. Vorteilhaft ist, wenn die Relation "Innenweite < 1.001 • Außenweite" gilt.

Sind die miteinander in der Passung befindlichen Umfänge, nämlich der Zentrier-Innenumfang des Gehäuse-Zentrierabschnitts und der Zentrier-Außenumfang der Stator-Zentrierstruktur, kreiszylindrisch, wie dies bevorzugt wird, ist die radiale Weite ein Kreisdurchmesser. Die Innenweite ist dann der Durchmesser des Zentrier-Innenumfangs, und die Außenweite ist der Durchmesser des Zentrier-Außenumfangs.

Der Gehäuse-Zentrierabschnitt kann in der Passung bei gleichem Nenndurchmesser auf eine Toleranzlage H aus dem Bereich H7 bis H10 oder H7 bis H9 gefertigt sein. Die Stator-Zentrierstruktur kann in der Passung auf eine Toleranzlage h aus dem Bereich h6 bis h11 oder h6 bis h9 gefertigt sein.

Sämtliche Angaben zu Passungen beziehen sich auf die am Anmeldetag geltende ISO 286.

Der Motorraum weist im Bereich des aufwärtigen Motorraum-Abschnitts vorzugsweise einen zylindrischen Innenumfang auf. Der zylindrische Innenumfang kann sich in Richtung Pumpenraum bis unmittelbar zur Verengung erstrecken. Der Innenumfang, mit dem die Gehäusestruktur den Motorraum umgibt, kann insbesondere im Bereich der Verengung zylindrisch, bevorzugt kreiszylindrisch sein. Der aufwärtige Motorraum-Abschnitt kann sich mit dem zylindrischen Innenumfang vom Pumpenraum wegweisend axial bis zur Motorraum-Öffnung erstrecken und bevorzugt unter Bildung der Motorraum-Öffnung zylindrisch auslaufen. Die Motorraum-Öffnung kann der größte Querschnitt, vorzugsweise Kreisquerschnitt, des Motorraums sein. Von der Motorraum-Öffnung in Richtung auf den Pumpenraum verengt sich der Motorraum in vorteilhaften Ausführungen nur noch.

Die Gehäusestruktur kann den Pumpenraum und den Motorraum als einen zusammenhängenden Gehäuseraum umgeben, so dass die Komponenten der Pumpe beim Zusammenbau der Einheit durch die Motorraum-Öffnung und den Motorraum hindurch in den Pumpenraum einsetzbar sind. Der Innenumfang der Gehäusestruktur, der den Pumpenraum und den Motorraum axial aufeinander folgend umgibt, kann sich von der Motorraum-Öffnung bis in den Pumpenraum und vorteilhafterweise über die gesamte Länge des Pumpenraums sukzessive radial verengen. In zweckmäßigen Ausführungen findet in Montagerichtung fortschreitend, von einschließlich der Motorraum-Öffnung bis einschließlich einem axialen Ende des Pumpenraums ausschließlich eine Verengung statt, bevorzugt in einer oder mehreren Stufen, wobei die jeweilige Stufe treppenförmig oder insbesondere rampenförmig sein kann.

Die Stator-Zentrierstruktur weist einen freien Außenumfang auf, den der Gehäuse-Zentrierabschnitt in der Passung zentrierend umfasst. "Freier Außenumfang" bedeutet in diesem Zusammenhang, dass der betreffende Außenumfang vor dem Zusammenbau der Pumpe-Motor-Einheit, also am Stator als solchen, radial frei nach außen weist, so dass er unmittelbar in die Passung mit dem Gehäuse-Zentrierabschnitt gebracht werden kann. Der freie Außenumfang kann den bereits erwähnten Zentrier-Außenumfang des Stators bilden.

Der Zentrier-Außenumfang des Stators kann voreilhafterweise mit den Spulen axial überlappen. Er kann mehrere der Spulen, grundsätzlich auch alle Spulen, umgeben. Nicht zuletzt der Kompaktheit wegen ist es vorteilhaft, wenn der Gehäuse-Zentrierabschnitt den Zentrier-Außenumfang in axialer Überlappung mit den Spulen des elektrischen Antriebsmotors in der Passung zentrierend umfasst. Der in der Passung befindliche, bis zur Montage freie Zentrier-Außenumfang kann insbesondere der größte Außenumfang des Stators, das heißt der Außenumfang mit der größten radialen Weite sein. Eine große radiale Weite der in der zentrierenden Passung befindlichen Umfänge ist zur Verhinderung von Kippbewegungen bei der Montage günstig.

Weist der Stator elektrische Spulen und dementsprechend einen Spulenkern auf, kann die Zentrierstruktur in radialer Verlängerung des Spulenkerns vorgesehen sein. Die Zentrierstruktur kann aus dem gleichen Material wie der Spulenkern bestehen. Die Zentrierstruktur kann den Spulenkern umgeben und mit dem Spulenkern unbeweglich verbunden sein. In derartigen Ausführungen kann die Zentrierstruktur aus einem anderen Material als der Spulenkern bestehen. Bevorzugter ist der Spulenkern jedoch nach radial außen über die Spulen hinaus soweit verlängert, dass er zugleich die Zentrierstruktur und mit seinem Außenumfang den Zentrier-Außenumfang bildet. Der Zentrier-Außenumfang kann in beiden Ausführungen einen Axialabschnitt des Spulenkerns umgeben, das eine Mal als Außenumfang einer mit dem Spulenkern gefügten Zentrierstruktur, das andere Mal als Außenumfang unmittelbar des Spulenkerns. In bevorzugten Ausführungen ist der Zentrier-Außenumfang ein der Motorraum-Öffnung abgewandter Axialabschnitt des Außenumfangs des Spulenkerns, wobei sich der Zentrier-Außenumfang bis zu einem der Motorraum-Öffnung abgewandten Rand des Außenumfangs des Spulenkerns erstreckt. Der Zentrier-Außenumfang erstreckt sich vorteilhafterweise über weniger als 40% oder weniger als 20% der axialen Erstreckung des Spulenkerns, wobei die axiale Erstreckung des Spulenkerns über alles, bezogen nur auf den Spulenkern, gemessen wird.

Der Stator kann mehrere Zentriernocken umfassen, die in Umfangsrichtung voneinander beanstandet sind und in axialer Überlappung mit den Spulen nach radial außen vorragen. Die Zentriernocken können gemeinsam die Stator-Zentrierstruktur bilden. Die Zentriernocken können gemeinsam und insbesondere allein den vorstehend beschriebenen Zentrier-Außenumfang der Stator-Zentrierstruktur bilden. Ein in Umfangsrichtung unterbrochener, in der zentrierenden Passung befindlicher Zentrier-Außenumfang fördert die Passgenauigkeit und kann darüber hinaus axiale Passagen beispielsweise für eine Durchleitung des zu fördernden Fluids bilden. Alternativ oder zusätzlich zu einer optionalen Fluidpassage kann oder können zwischen jeweils zwei benachbarten Zentriernocken ein oder mehrere axiale Vorsprünge der Gehäusestruktur und/oder einer im Motorraum angeordneten anderen Komponente, wie etwa eines Pumpenraum-Deckels, hinein- oder durchragen und/oder Aufnahmeraum für ein oder mehrere andere Komponenten der Pumpe-Motor-Einheit gewonnen werden.

Der Motorraum kann sich vom aufwärtigen Motorraum-Abschnitt beispielsweise über eine Rampe auf den Gehäuse-Zentrierabschnitt verengen. Eine kontinuierliche, beispielsweise rampenförmige Verengung erstreckt sich zweckmäßigerweise aber lediglich über eine vergleichsweise kurze axiale Länge, die zumindest kürzer als die axiale Länge des aufwärtigen Motorraum-Abschnitts und vorzugsweise auch kürzer als die axiale Überlappungslänge von Gehäuse-Zentrierabschnitt und Stator-Zentrierstruktur ist. Grundsätzlich kann sich der Motorraum vom aufwärtigen Motorraum-Abschnitt stattdessen abrupt, treppenstufenförmig, auf den Gehäuse-Zentrierabschnitt verengen.

Der Motorraum verengt sich beim Übergang vom aufwärtigen Motorraum-Abschnitt auf den Gehäuse-Zentrierabschnitt in vorteilhaften Ausführungen nur geringfügig. Die Verengung ist vorzugsweise nur als Zentrierstufe ausgeführt. Eine größte Weite des aufwärtigen Motorraum-Abschnitts ist vorzugsweise höchstens um 2% oder höchstens um 1% größer als eine größte Weite des Gehäuse-Zentrierabschnitts. Eine nur geringfügige Aufweitung vom Gehäuse-Zentrierabschnitt auf den aufwärtigen Motorraum-Abschnitt ist einer kompakten Bauweise der Pumpe-Motor-Einheit förderlich.

Die Gehäusestruktur kann im Bereich des Motorraums einen oder mehrere weitere Gehäuse-Zentrierabschnitte aufweisen. So kann sich ein weiterer, zweiter Gehäuse-Zentrierabschnitt von der Motorraum-Öffnung aus gesehen axial entweder vor oder hinter dem der Zentrierung des Stators dienenden Gehäuse-Zentrierabschnitt erstrecken. Ein abwärtiger Gehäuse-Zentrierabschnitt kann sich von der Motorraum-Öffnung aus gesehen hinter dem der Zentrierung des Stators dienenden Gehäuse-Zentrierabschnitt erstrecken, um beispielsweise einen Pumpenraum-Deckel zu zentrieren.

Die Gehäusestruktur kann eine Gehäuse-Stirnwand und eine von der Gehäuse-Stirnwand axial vorragende Gehäuse-Umfangswand aufweisen, wobei die Gehäuse-Umfangswand den aufwärtigen Motorraum-Abschnitt und den Gehäuse-Zentrierabschnitt bildet. Umfasst die Pumpe-Motor-Einheit beispielsweise den Pumpenraum-Deckel, kann der Pumpenraum-Deckel in die Gehäusestruktur eingesetzt sein und eine Stirnwand des Pumpenraums und optional auch eine Stirnwand des Motorraums bilden.

In Weiterbildungen kann die von der Gehäuse-Stirnwand vorragende Gehäuse-Umfangswand axial zwischen dem Gehäuse-Zentrierabschnitt und der Gehäuse-Stirnwand einen weiteren, in Bezug auf die Montagerichtung abwärtigen Gehäuse-Zentrierabschnitt bilden, indem sich der Motorraum in Richtung auf die Gehäuse-Stirnwand auf den abwärtigen Gehäuse-Zentrierabschnitt verengt. So kann sich der Motorraum insbesondere von dem der Zentrierung des Stators dienenden Gehäuse-Zentrierabschnitt auf den abwärtigen Gehäuse-Zentrierabschnitt verengen. Die weitere Verengung, auf den abwärtigen Gehäuse-Zentrierabschnitt kann beispielsweise abrupt in Form einer Treppenstufe oder stattdessen wie bevorzugt in Form einer Rampe vonstattengehen. Der abwärtige Gehäuse-Zentrierabschnitt kann vorteilhaft der Zentrierung des Pumpenraum-Deckels relativ zur Gehäusestruktur dienen und den Pumpenraum-Deckel zu diesem Zweck mit Passung einfassen, so dass der Pumpenraum-Deckel in einem Zentriereingriff mit dem abwärtigen Gehäuse-Zentrierabschnitt in Bezug auf die Drehachse zentriert wird. Der Pumpenraum-Deckel kann vorteilhafterweise axial unmittelbar an der Gehäuse-Stirnwand anliegen.

Im Zentriereingriff von Pumpenraum-Deckel und abwärtigem Gehäuse-Zentrierabschnitt umfasst ein Zentrier-Innenumfang des abwärtigen Gehäuse-Zentrierabschnitt einen Zentrier-Außenumfang des Pumpenraum-Deckels in einer für die Zentrierung geeigneten Passung. Der Zentrier-Außenumfang des Pumpenraum-Deckels und Zentrier-Innenumfang des abwärtigen Gehäuse-Zentrierabschnitts können aneinander so angepasst sein, dass in diesem Zentriereingriff um die Drehachse umlaufend eine Abdichtung gegen Fluiddurchtritt in Richtung Motorraum erhalten wird. Eine Passung der im Zentriereingriff befindlichen Umfänge kann der Passung zwischen der Stator-Zentrierstruktur und dem damit zusammenwirkenden Gehäuse-Zentrierabschnitt entsprechend oder grundsätzlich auch weiter gewählt sein. Zur Erfüllung einer Dichtfunktion ist es jedoch günstiger, wenn die Passung von Pumpenraum-Deckel und abwärtigem Gehäuse-Zentrierabschnitt enger als die Passung zwischen der Stator-Zentrierstruktur und dem damit zusammenwirkenden Gehäuse-Zentrierabschnitt ist.

Weist die Gehäusestruktur einen oder mehrere weitere Zentrierabschnitte, wie etwa den Zentrierabschnitt für einen Pumpenraum-Deckel, auf, verengt sich der Innenumfang der Gehäusestruktur jeweils beim Übergang von einem aufwärtigen Abschnitt, der nicht unumgänglich ein Zentrierabschnitt sein muss, auf einen abwärtigen Zentrierabschnitt in vorteilhaften Ausführungen nur geringfügig. Die Verengung ist vorzugsweise jeweils nur als Zentrierstufe ausgeführt. Eine größte Weite des jeweils aufwärtigen Abschnitts ist vorzugsweise höchstens um 2% oder höchstens um 1% größer als eine größte Weite des nächsten benachbart abwärtigen Abschnitts. Eine jeweils nur geringfügige Aufweitung vom abwärtigen Abschnitt auf den benachbart aufwärtigen Abschnitt ist einer kompakten Bauweise der Pumpe-Motor-Einheit förderlich.

Der aufwärtige Motorraum-Abschnitt kann sich axial zwischen der Motorraum-Öffnung und dem Gehäuse-Zentrierabschnitt, welcher der Zentrierung des Stators dient, in Richtung auf diesen Gehäuse-Zentrierabschnitt ein weiteres Mal verengen. Diese aufwärtige Verengung kann beispielsweise in Form einer Treppenstufe abrupt oder wie bevorzugt in Form einer Rampe erfolgen. Die aufwärtige Verengung kann der Zentrierung einer in den Motorraum eingesetzten Komponente der Pumpe-Motor-Einheit, beispielsweise einer Kühlungs- und/oder Strömungsleitstruktur, dienen. Die aufwärtige Verengung kann insbesondere eine der Motorraum-Öffnung axial nächste Verengung sein. Die aufwärtige Verengung muss allerdings nicht auf eine enge Passung mit einer Komponente gefertigt sein. Sie kann stattdessen dazu dienen, dass der Stator beim Einführen in den Motorraum durch in axialer Einführrichtung sukzessiv engere Querschnitte grob geführt, quasi vorzentriert wird, bis er schließlich in die zentrierende Passung mit dem zugeordneten Gehäuse-Zentrierabschnitt gelangt.

Betrachtet man den Motorraum vom Pumpenraum aus gesehen axial in Richtung auf die Motorraum-Öffnung, entsteht durch die der Motorraum-Öffnung nahe aufwärtige Verengung in Richtung auf die Motorraum-Öffnung entsprechend eine Aufweitung. Der Motorraum kann im Bereich dieser Aufweitung über seinen Innenumfang umlaufend glatt unter Bildung der Motorraum-Öffnung auslaufen. Ein Motorraum-Deckel kann eine Deckel-Umfangswand aufweisen, die von einem Deckelboden axial vorragt und in einen derart aufgeweiteten, die Motorraum-Öffnung aufweisenden Einlassabschnitt der Gehäusestruktur ragen. Der Motorraum kann im Bereich der axialen Überlappung des Einlassabschnitts der Gehäusestruktur und der Deckel-Umfangswand gegen die äußere Umgebung der Motor-Pumpe-Einheit abgedichtet sein, beispielsweise mittels einer Radialdichtung, die zwischen Einlassabschnitt und Deckel-Umfangswand um die Drehachse umläuft.

Die Gehäusestruktur kann aus mehreren miteinander unbeweglich gefügten Unterstrukturen bestehen. Bevorzugter ist die Gehäusestruktur jedoch in einem Stück urgeformt. Sie kann zweckmäßigerweise ein Metallgusskörper oder ein Kunststoffgusskörper aus einem wärmebeständigen Kunststoffmaterial sein. Sie kann beispielsweise auch generativ geformt sein.

Der Pumpenraum kann sich über seinen gesamten Querschnitt in den Motorraum öffnen. Dies bedeutet, dass axial zwischen dem Pumpenraum und dem Motorraum keine radial nach innen über den Pumpenraum vorragende Gehäusestruktur vorhanden ist, die eine Montage von Komponenten der Pumpe durch die Motorraum-Öffnung hindurch behindern könnte.

Der Pumpenraum ist in vorteilhaften Ausführungen radial höchstens so weit wie ein kleinster Umfang des Motorraums, um das Förderrad und optional andere Komponenten der Pumpe durch die Motorraum-Öffnung und den Motorraum in den Pumpenraum einführen und im Pumpenraum anordnen zu können. Die Gehäusestruktur kann sich von der Motorraum-Öffnung bis in den Pumpenraum verengen, vorzugsweise sukzessiv in mehreren Stufen. Eine oder mehrere dieser Verengungen können wie vorstehend bereits angemerkt über eine Rampe vonstattengehen. Eine oder mehrere der radialen Verengungen kann oder können aber auch treppenstufenförmig sein.

Die jeweilige Verengung von einem in Bezug auf die Montagerichtung aufwärtigen Gehäuseabschnitt auf einen demgegenüber nächstbenachbart abwärtigen Gehäuseabschnitt, insbesondere auf einen Gehäuse-Zentrierabschnitt, ist in bevorzugten Ausführungen rampenförmig. Die jeweilige Rampe kann über ihren Verlauf bogenförmig rund oder zweckmäßigerweise gerade, als schräge Rampe ausgeführt sein. Die jeweilige Rampe schließt in Längsschnitten mit der Drehachse des Rotors einen Winkel ein, der über den gesamten Verlauf der Rampe vorteilhafterweise kleiner als 60° oder kleiner als 50° ist, so dass die im Motorraum oder Pumpenraum anzuordnenden Komponenten beim Zusammenbau der Pumpe-Motor-Einheit an der jeweiligen Verengung axial nicht blockiert werden, sollte ein Montageautomat die jeweilige Komponente einmal nicht mit 100%-iger Präzision relativ zur Gehäusestruktur positionieren und/oder führen.

Die Pumpe-Motor-Einheit kann für den Verschluss des Motorraums und des Pumpenraums einen Motorraum-Deckel und einen Pumpenraum-Deckel umfassen. Der Motorraum-Deckel verschließt die Motorraum-Öffnung und ist mit der Gehäusestruktur vorzugsweise lösbar gefügt, beispielsweise verschraubt. Der Pumpenraum-Deckel kann in die Gehäusestruktur eingesetzt sein und dem Motorraum-Deckel axial gegenüberliegen und den Motorraum dort begrenzen, während er gleichzeitig den Pumpenraum axial begrenzt.

In Ausführungen, in denen die Pumpe-Motor-Einheit einen in die Gehäusestruktur eingesetzten Pumpenraum-Deckel umfasst, der eine Stirnwand des Pumpenraums und optional auch eine Stirnwand des Motorraums bildet, kann die Gehäusestruktur eine Gehäuse-Stirnwand und eine von der Gehäuse-Stirnwand vorragende Gehäuse-Umfangswand aufweisen. Diese Gehäuse-Umfangswand kann den Motorraum-Abschnitt und den der Zentrierung des Stators dienenden Gehäuse-Zentrierabschnitt bilden und an einem vom Pumpenraum abgewandten Stirnende unter Ausbildung der Motorraum-Öffnung auslaufen. Der Pumpenraum-Deckel kann vorteilhafterweise an der Gehäuse-Stirnwand, von der die Gehäuse-Umfangswand vorragt, axial anliegen.

Die Gehäusestruktur kann an einer der Motorraum-Öffnung axial fernen Rückseite einen Pumpenraum-Boden aufweisen, der den Pumpenraum axial begrenzt. Zur axialen Begrenzung des Pumpenraums kann das Gehäuse der Einheit stattdessen auch einen lösbaren Pumpenraum-Deckel aufweisen. Einer Gehäusestruktur mit urgeformtem Pumpenraum-Boden wird jedoch der Vorzug gegeben.

Der Pumpenraum umfasst eine Förderkammer, in der das Förderrad drehbar aufgenommen ist, und das Gehäuse umfasst einen mit der Förderkammer verbundenen Niederdruckkanal und einen mit der Förderkammer verbundenen Hochdruckkanal. Bei Drehantrieb des Förderrads wird das Fluid vom Niederdruckkanal in die Förderkammer und über die Förderkammer unter Druckerhöhung zum Hochdruckkanal gefördert. Der Niederdruckkanal und/oder der Hochdruckkanal kann oder können jeweils an einer der Motorraum-Öffnung axial abgewandten Rückseite des Gehäuses münden, so dass an dieser Rückseite ein Niederdruckanschluss und/oder ein Hochdruckanschluss gebildet ist oder sind. In bevorzugten Ausführungen münden der Niederdruckkanal und der Hochdruckkanal jeweils axial an der betreffenden Rückseite des Gehäuses, so dass die Pumpe-Motor-Einheit in axialer Richtung sehr einfach an eine Zuführung und eine Abführung für das Fluid anschließbar ist. Besonders vorteilhaft ist, wenn der Niederdruckkanal eine axial gerade Verbindung der Förderkammer mit dem Niederdruckanschluss und/oder der Hochdruckkanal eine axial gerade Verbindung der Förderkammer mit dem Hochdruckanschluss herstellt oder jeweils herstellen.

In vorteilhaften Ausführungen ist der Stator axial fixiert, also relativ zur Gehäusestruktur im Motorraum axial unbeweglich angeordnet. Der Stator kann beispielsweise mittels Schraubverbindung und/oder Klebeverbindung und/oder Schweißverbindung fixiert sein. Bevorzugter wird er im Motorraum jedoch durch axialen Anschlagkontakt kraftschlüssig mit axialer Klemmkraft in einem Klemmeingriff gehalten. In derartigen Ausführungen wird es weiter bevorzugt, wenn der Stator im Motorraum ausschließlich durch den axialen Anschlagkontakt gehalten wird. Im Klemmeingriff presst ein axialer Anschlag, der auf eine der Motorraum-Öffnung axial zugewandte Stirnfläche des Stators wirkt, den Stator gegen ein axiales Widerlager, das auf eine der Motorraum-Öffnung axial abgewandte Stirnfläche des Stators wirkt. Mit dem Stator im Axialkontakt befindliche Klemmflächen des Anschlags und des Widerlagers können relativ zueinander in Umfangsrichtung und/oder in Radialrichtung versetzt sein. Vorteilhafter ist es jedoch, wenn vom Anschlag und dem Widerlager gebildete Druck- und Gegendruckflächen einander jeweils in axialer Flucht gegenüberliegen, so dass durch den Klemmeingriff im Stator keine oder allenfalls vernachlässigbare Spannungen quer zur Axialen erzeugt werden.

Der Anschlagkontakt besteht vorzugsweise radial außen von den Spulen. Eine Anschlagstruktur, die den Anschlag an einem freien Stirnende bildet, kann mit den Spulen axial überlappen. Sie kann insbesondere mit der Motorraum-Öffnung zugewandten Wickelköpfen der Spulen, beispielsweise nur mit diesen Wickelköpfen, axial überlappen.

In bevorzugten Ausführungen dient die Stator-Zentrierstruktur nicht nur der Zentrierung des Stators, sondern wird auch für den Klemmeingriff genutzt, indem die Klemmkraft in die Stator-Zentrierstruktur eingeleitet wird. Dabei wird es weiter bevorzugt, wenn die axiale Klemmkraft nur in die Stator-Zentrierstruktur, das heißt nur über die Stator-Zentrierstruktur in den Stator eingeleitet wird. In solch bevorzugter Ausführung wird der Stator somit radial weiter außen als die Spulen nur im Bereich der Stator-Zentrierstruktur axial geklemmt.

Insbesondere kann ein Motorraum-Deckel, der die Motorraum-Öffnung abdeckelt, als Klemmstruktur dienen und den Stator axial gegen das Widerlager drücken und dadurch im Motorraum axial klemmen.

Das Widerlager kann von einer in die Gehäusestruktur eingesetzten und an der Gehäusestruktur axial abgestützten, vorzugsweise axial unbeweglich abgestützten Komponente der Pumpe-Motor-Einheit oder die Gehäusestruktur selbst gebildet werden. Ist in die Gehäusestruktur ein Pumpenraum-Deckel eingesetzt, der axial zwischen dem Motorraum und dem Pumpenraum angeordnet und an der Gehäusestruktur axial abgestützt ist, kann der Stator vorteilhafterweise axial gegen diesen Pumpenraum-Deckel gepresst und dadurch axial geklemmt werden. Der Pumpenraum-Deckel kann somit das axiale Widerlager bilden.

Ein Pumpenraum-Deckel, der den Pumpenraum axial abschließt, kann einen Deckelboden und eine vom Deckelboden axial in den Motorraum vorragende Umfangswand aufweisen. Der Pumpenraum-Deckel kann ein Widerlager zum Klemmen des Stators mit mehreren um die Drehachse des Rotors verteilt angeordneten, axial vorragenden Widerlagerelementen und/oder mit einem dem Stator zugewandten Umfangsrand solch einer Umfangswand bilden. Die Umfangswand kann um die Drehachse des Rotors über wenigstens einen überwiegenden Teil des Umfangs kontinuierlich umlaufen oder aus mehreren separaten Umfangsabschnitten gebildet werden. Die optionale Umfangswand des Pumpenraum-Deckels und/oder die optionalen mehreren axial vorstehenden diskreten Widerlagerelemente kann oder können jeweils mit den elektrischen Spulen des Antriebsmotors axial überlappen, wobei sich die Umfangswand und/oder die Widerlagerelemente radial außen von den Spulen erstreckt/erstrecken. Die jeweilige Widerlagerstruktur, ob Umfangswand oder diskretes Widerlagerelement, kann insbesondere mit der Motorraum-Öffnung abgewandten Wickelköpfen der Spulen, beispielsweise nur mit diesen Wickelköpfen, axial überlappen.

Ein Motorraum-Deckel, der die Motorraum-Öffnung verschließt, kann einen Deckelboden und eine vom Deckelboden axial in den Motorraum vorragende innere Umfangswand und/oder eine vom Deckelboden axial vom Motorraum wegweisend vorragende äußere Umfangswand aufweisen. Die innere Umfangswand, falls vorhanden, kann mit einem dem Stator zugewandten Umfangsrand den Anschlag zum Klemmen des Stators bilden. Die innere Umfangswand, falls vorhanden, überlappt axial mit dem aufwärtigen Motorraum-Abschnitt, beispielsweise dem erwähnten Einlassabschnitt, wobei im Bereich der Überlappung eine Dichtung angeordnet sein kann, um die Motorraum-Öffnung abzudichten. Die innere Umfangswand, falls vorhanden, kann mit den Spulen axial überlappen, insbesondere in Ausführungen, in denen sie den Anschlag zum Klemmen des Stators bildet. Sie kann insbesondere mit der Motorraum-Öffnung zugewandten Wickelköpfen der Spulen, beispielsweise nur mit diesen Wickelköpfen, axial überlappen. Die äußere Umfangswand, falls vorhanden, kann eine Umfangswand eines vom Deckelboden axial begrenzten Elektronikraums bilden. Sie kann in dieser Funktion eine im Elektronikraum aufgenommene Steuerungseinrichtung für den elektrischen Antriebsmotor umgeben.

Für den Stator kann in Bezug auf die Drehachse eine Drehwinkelposition vorgegeben sein. Die Drehwinkelposition kann insbesondere durch einen auf Formschluss beruhenden Positioniereingriff des Stators und einer Positionierstruktur, beispielsweise einem Positionierstift, vorgegeben werden. Die Positionierstruktur kann mit der Gehäusestruktur unbeweglich gefügt sein oder auch unmittelbar von der Gehäusestruktur gebildet werden. Ist in der Gehäusestruktur ein Pumpenraum-Deckel angeordnet, der den Pumpenraum und den Motorraum begrenzt, kann der Pumpenraum-Deckel die Positionierstruktur für den Positioniereingriff mit dem Stator aufweisen. Zur Bestimmung der Drehwinkelposition des Pumpenraum-Deckels relativ zur Gehäusestruktur kann der Pumpenraum-Deckel eine weitere Positionierstruktur aufweisen. Alternativ kann eine mit dem Pumpenraum-Deckel gefügte Positionierstruktur, die den Pumpenraum-Deckel beispielsweise durchragt, in einem ersten Positioniereingriff den Stator zum Pumpenraum-Deckel und in einem zweiten Positioniereingriff zugleich den Pumpenraum-Deckel zur Gehäusestruktur in Bezug auf die Drehwinkelposition positionieren. Die Gehäusestruktur weist in solchen Ausführungen eine Gegenstruktur, beispielsweise eine Vertiefung in einer Stirnwand, für den Positioniereingriff mit der Positionierstruktur des Pumpenraum-Deckels auf. Im Positioniereingriff ist der Stator relativ zum Pumpenraum-Deckel oder direkt relativ zur Gehäusestruktur in Umfangsrichtung festgelegt. Besteht der Positioniereingriff mit dem Pumpenraum-Deckel, wird dieser in einem weiteren Positioniereingriff mit der Gehäusestruktur relativ zu dieser in Umfangsrichtung festgelegt.

In vorteilhaften Ausführungen wird die Drehwinkelposition des Stators relativ zur Gehäusestruktur durch einen Positioniereingriff der Positionierstruktur mit der Stator-Zentrierstruktur bestimmt. Die Stator-Zentrierstruktur dient in derartigen Weiterbildungen somit nicht nur der Zentrierung des Stators, sondern auch zur Vorgabe der Drehwinkelposition des Stators.

Die Positionierstruktur kann in Richtung auf die Motorraum-Öffnung in die Stator-Zentrierstruktur ragen und somit im Zusammenwirken mit der Stator-Zentrierstruktur den Positioniereingriff herstellen und eine gewünschte Drehwinkelposition des Stators relativ zur Gehäusestruktur direkt oder über den Pumpenraum-Deckel bestimmen.

Wird die Gehäuse-Zentrierstruktur von Zentriernocken gebildet, die wie vorstehend beschrieben in Umfangsrichtung voneinander beabstandet sind und nach radial außen vorragen, um den Zentrier-Außenumfang des Stators zu bilden, kann die Positionierstruktur zwischen zwei in Umfangsrichtung benachbarte Zentriernocken in den Positioniereingriff vorragen, um die Drehwinkelposition des Stators zu bestimmen. In Umfangsrichtung benachbarte Zentriernocken, zwischen die die Positionierstruktur im Positioniereingriff axial ragt, können sich in axialer Richtung verjüngen, so dass sie in Axialrichtung eine trichterförmige Öffnung oder Passage für die Positionierstruktur bilden. Dies ermöglicht oder erleichtert beim Zusammenbau eine Zentrierung des Stators in Bezug auf die Umfangsrichtung.

Die Stator-Zentrierstruktur kann somit der Zentrierung des Stators auf die Drehachse des Rotors des Antriebsmotors und/oder der axialen Fixierung, vorzugsweise einer rein auf Anschlagkontakt beruhenden axialen Klemmung des Stators und/oder der Bestimmung der Drehwinkelposition des Stators dienen. Diese drei Funktionen sind jeweils für sich, aber auch in jeder Zweierkombination vorteilhaft. Vorteilhaft ist beispielsweise auch die Ausbildung einer radial über die Spulen hinaus vorstehenden Stator-Zentrierstruktur, die nicht die hier beanspruchte Zentrierfunktion erfüllt, aber der auf Anschlagkontakt beruhenden axialen Fixierung durch axiale Klemmung in Kombination mit der Bestimmung der Drehwinkelposition dient. Die Erfüllung aller drei Funktionen ist jedoch besonders vorteilhaft.

Die Pumpe-Motor-Einheit kann für den Anbau an einer an einem Einbauort vorhandenen Aufnahmestruktur eingerichtet sein und für diesen Zweck einen Montageflansch für die Befestigung aufweisen. Sie kann auch als Einsteckpumpe ausgeführt und für den Einbau in einem Aufnahmeschacht einer Aufnahmestruktur eingerichtet sein. Die Aufnahmestruktur kann beispielsweise eine Gehäusewand eines Getriebes und/oder eines Antriebsmotors oder einer Kupplung eines Fahrzeugs sein.

Nachfolgend wird die Erfindung anhand eines Ausführungsbeispiels beschrieben. Anhand des Ausführungsbeispiels offenbar werdende Merkmale bilden jeweils einzeln und in jeder Merkmalskombination Merkmale der Ansprüche und der vorstehend beschriebenen Ausgestaltungen vorteilhaft weiter. Es zeigen:
- Figur 1:: eine Pumpe-Motor-Einheit im zusammengebauten Zustand in einer Isometrie;
- Figur 2:: Komponenten der Pumpe-Motor-Einheit in einer Isometrie längs einer zentralen Achse aufgereiht;
- Figur 3:: eine axiale Sicht in einen Motorraum der Pumpe-Motor-Einheit;
- Figur 4:: die noch nicht fertigmontierte Pumpe-Motor-Einheit in einem ersten Längsschnitt;
- Figur 5:: die fertigmontierte Pumpe-Motor-Einheit in einem zweiten Längsschnitt.

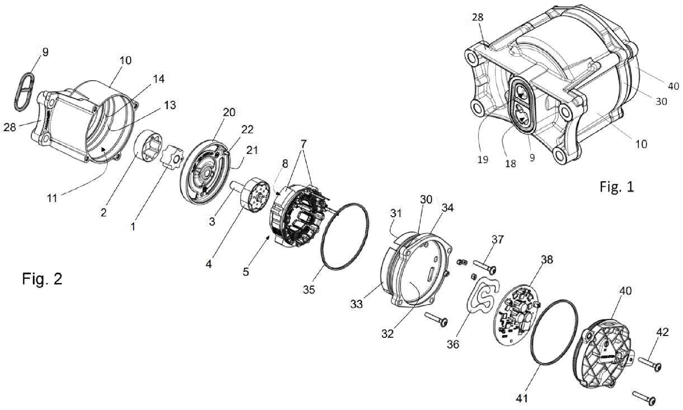

Figur 1 zeigt eine Pumpe-Motor-Einheit im montierten Zustand in einer Sicht auf eine Stirnseite, an der ein Niederdruckkanal 18 und ein Hochdruckkanal 19 nebeneinander in einer axialen Richtung münden. Die Mündung des Niederdruckkanals 18 bildet einen Niederdruckanschluss und die Mündung des Hochdruckkanals 19 bildet einen Hochdruckanschluss der Pumpe-Motor-Einheit. Eine stirnseitige Dichtung 9 dient dazu, die beiden Anschlüsse gegeneinander und gegen die äußere Umgebung abzudichten, wenn die Einheit an eine entsprechende Fluidzuführung und Fluidabführung angeschlossen ist. Ist die Einheit in einem Fluidkreis angeordnet, beispielsweise in einem Getriebeölkreis, Arbeitsölkreis, Schmiermittel- und/oder Kühlmittelkreis eines Fahrzeugs, saugt sie im Pumpenbetrieb ein zu förderndes Fluid, beispielsweise ein Getriebeöl und/oder Motorschmieröl und/oder Kühlflüssigkeit und/oder Arbeitsöl, über den Niederdruckanschluss an und fördert es mit erhöhtem Druck über den Hochdruckanschluss ab.

Die Pumpe-Motor-Einheit weist einen Montageflansch 28 auf, mit dem sie an einer am Einbauort vorhandenen Aufnahmestruktur befestigt werden kann, beispielsweise an einer Gehäusewand eines Getriebes oder eines Antriebsmotors oder einer Kupplung eines Fahrzeugs. Wegen der axialen Ausrichtung des Niederdruckanschlusses und des Hochdruckanschlusses und der Anordnung im Bereich des Montageflansches 28 ist mit der Befestigung der Pumpe-Motor-Einheit zugleich auch der Anschluss an den Fluidkreis hergestellt. Für die Montage am Einbauort ist auch vorteilhaft, wenn der Niederdruckanschluss und der Hochdruckanschluss unmittelbar nebeneinander liegen. Dies erleichtert zudem die Abdichtung mit nur einer einzigen Dichtung 9.

In der Isometrie der Figur 2 sind die Komponenten der Pumpe-Motor-Einheit längs einer Montageachse für den Zusammenbau der Einheit hintereinander aufgereiht. Der Niederdruckkanal 18 und der Hochdruckkanal 19 (Figur 1) münden parallel zu der Montageachse an der in Figur 2 rückwärtigen Stirnseite der Pumpe-Motor-Einheit.

Die Pumpe-Motor-Einheit umfasst eine Pumpe mit einem ersten Förderrad 1 und einem zweiten Förderrad 2 und einen elektrischen Antriebsmotor mit einem Rotor 4 und einem Stator 5. Die Pumpe ist eine Innenzahnradpumpe, wobei das Förderrad 1 ein außenverzahntes inneres Förderrad und das Förderrad 2 ein innenverzahntes Hohlrad ist. Innenzahnradpumpen sind kompakt und robust. Grundsätzlich kann die Pumpe jedoch stattdessen als Außenzahnradpumpe oder Flügelzellenpumpe ausgeführt sein, um nur Beispiele für alternativ verwendbare Pumpenbauarten zu nennen. Die Ausführung als Rotationspumpe mit wenigstens einem drehangetriebenen Förderrad wird bevorzugt. Der elektrische Antriebsmotor kann beispielsweise ein bürstenloser Gleichstrommotor sein und der Stator 5 über den Umfang verteilt elektrische Spulen 6 aufweisen, wie etwa im Ausführungsbeispiel. Andere Bauformen von Elektromotoren können jedoch stattdessen ebenfalls verwendet werden.

Die Komponenten der Pumpe, wie insbesondere die Förderräder 1 und 2, und die Komponenten des Elektromotors, wie insbesondere der Rotor 4 und der Stator 5, sind in einem gemeinsamen Gehäuse angeordnet und bilden somit gemeinsam mit dem Gehäuse die Einheit.

Das Gehäuse umfasst eine Gehäusestruktur 10, einen Pumpenraum-Deckel 20, einen Motorraum-Deckel 30 und einen Elektronikdeckel 40. Die Gehäusestruktur 10 weist eine Umfangswand auf, die einen Motorraum zur Aufnahme des Elektromotors 4, 5 umgibt und an einer Stirnseite in einer Motorraum-Öffnung 11 ausläuft. Die Gehäusestruktur 10 weist auch den Montageflansch 28 auf.

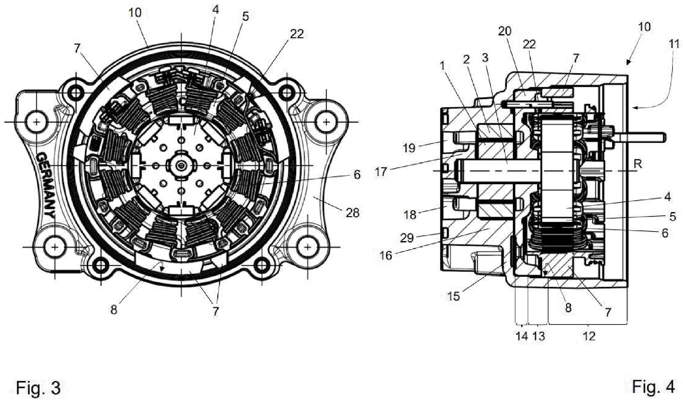

In den Figuren 3 und 4 sind die Förderräder 1 und 2 der Pumpe, der Pumpenraum-Deckel 20 und der Rotor 4 sowie der Stator 5 des Antriebsmotors in die Gehäusestruktur 10 eingesetzt. Die stirnseitige Motorraum-Öffnung 11 ist noch nicht verschlossen.

Die Förderräder 1 und 2 sind in einem Pumpenraum aufgenommen. Die Gehäusestruktur 10 umfasst einen Pumpenraum-Abschnitt 16, mit dem sie den Pumpenraum umgibt. Die Gehäusestruktur 10 bildet an einer der Motorraum-Öffnung 11 fernen Stirnseite des Pumpenraums einen Pumpenraum-Boden 17, der an dieser Stirnseite den Pumpenraum axial begrenzt. Der Pumpenraum-Deckel 20 begrenzt den Pumpenraum an seiner anderen, der Motorraum-Öffnung 11 näheren Stirnseite. Der Pumpenraum-Deckel 20 trennt den Pumpenraum vom Motorraum. Der Niederdruckkanal 18 und der Hochdruckkanal 19 erstrecken sich durch den Pumpenraum-Boden 17, vorzugsweise jeweils axial gerade, und münden axial unter Bildung des jeweiligen Fluidanschlusses an der äußeren Stirnseite des Pumpenraum-Bodens 17. Die Dichtung 9 ist eine Axialdichtung, die am Einbauort der Pumpe-Motor-Einheit axial gegen die dort vorhandene Aufnahmestruktur gedrückt wird, um ihre Dichtfunktion zu erfüllen. Der Pumpenraum-Boden 17 kann an seiner äußeren Stirnseite eine Dichtungsnut 29 zur Aufnahme der Dichtung 9 aufweisen.

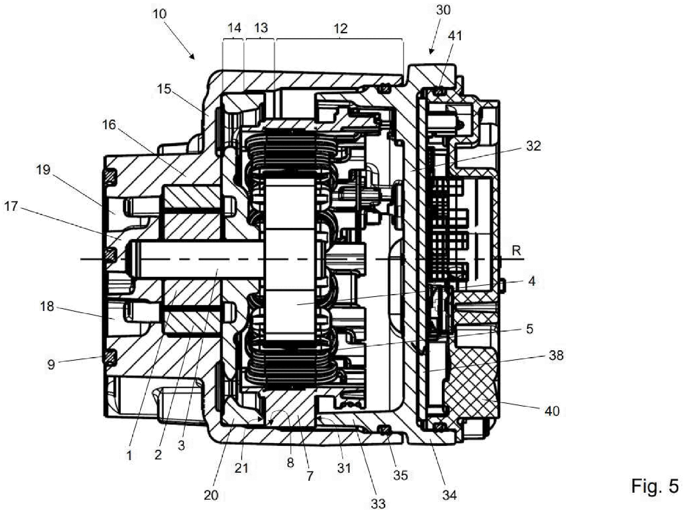

Figur 5 zeigt die Pumpe-Motor-Einheit im fertig zusammengebauten Zustand. Der Motorraum-Deckel 30 verschließt die Motorraum-Öffnung 11 und dadurch den Motorraum an der betreffenden Stirnseite fluiddicht. Der Elektronikdeckel 40 ist am Motorraum-Deckel 30 befestigt. Die Deckel 30 und 40 schließen gemeinsam einen Elektronikraum ein, in dem eine elektronische Steuerungseinrichtung 38 zur Steuerung und/oder Regelung des Antriebsmotors 4, 5 aufgenommen ist.

Der Motorraum-Deckel 30 weist einen plattenförmigen Deckelboden 32, eine vom Deckelboden 32 axial in die Gehäusestruktur 10 ragende innere Umfangswand 33 und eine axial zur anderen Seite vorragende äußere Umfangswand 34 auf. Der Elektronikdeckel 40 ragt in die äußere Umfangswand 34 des Motorraum-Deckels 30 und schließt gemeinsam mit dem Motorraum-Deckel 30 den Elektronikraum ein. Eine zwischen der äußeren Umfangswand 34 und einer radial innen gegenüberliegenden Umfangswand des Elektronikdeckels 40 angeordnete Radialdichtung 41 dichtet den Elektronikraum gegen die äußere Umgebung der Pumpe-Motor-Einheit ab. Durch den Elektronikdeckel 40 sind elektrische Anschlüsse für den Antriebsmotor 4, 5 und die Steuerungsrichtung 38 nach außen geführt.

Der Rotor 4 und der Stator 5 sind im Motorraum aufgenommen. Eine Umfangswand der Gehäusestruktur 10 umgibt den Motorraum. Der Pumpenraum-Deckel 20 begrenzt den Motorraum an der dem Pumpenraum nahen Stirnseite, und der Motorraum-Deckel 30 begrenzt den Motorraum an seiner dem Pumpenraum-Deckel 20 axial gegenüberliegenden Stirnseite.

Das Förderrad 1 und der Rotor 4 sind jeweils drehunbeweglich mit einer Antriebswelle 3 verbunden, die sich vom Rotor 4 aus axial durch den Pumpenraum-Deckel 20 in den Pumpenraum erstreckt. Die Gehäusestruktur 10 und der Pumpenraum-Deckel 20 bilden jeweils ein Drehgleitlager für die Antriebswelle 3, die somit zu beiden Seiten der Förderräder 1 und 2 abgestützt ist. Das Förderrad 1, die Antriebswelle 3 und der Rotor 4 bilden im zusammengebauten Zustand eine Dreheinheit, die um eine Drehachse R drehbar ist. Die Drehachse R fällt mit der Montageachse der Pumpe-Motor-Einheit zusammen.

Um den Stator 5 in Bezug auf die Drehachse R zu zentrieren, weisen der Stator 5 eine Stator-Zentrierstruktur 7 und die Gehäusestruktur 10 einen Gehäuse-Zentrierabschnitt 13 auf. Die Stator-Zentrierstruktur 7 ragt mit enger radialer Passung axial in den Gehäuse-Zentrierabschnitt 13. Die Passung kann insbesondere so gewählt sein, dass der Stator 5 auch bei geringer axialer Überlappung der Stator-Zentrierstruktur 7 und des Gehäuse-Zentrierabschnitts 13 bei horizontaler Ausrichtung der Drehachse R in seiner Einbaulage ohne zusätzliche Befestigungsmittel gehalten wird, solange nur das Eigengewicht des Stators 5 wirkt. Die Länge des Zentriereingriffs beträgt in vorteilhaften Ausführungen höchstens 10%, bevorzugter höchstens 5%, einer größten radialen Weite der Stator-Zentrierstruktur 7. Die Passung kann im Zentriereingriff insbesondere eine Spielpassung mit höchstens geringem Spiel oder eine Übergangspassung sein. Ist der Zentriereingriff von Stator-Zentrierstruktur 7 und Gehäuse-Zentrierabschnitt 13 mit einer Übergangspassung verwirklicht, sind die Passungsmaße so gewählt, dass höchstens eine geringe axial Kraft erforderlich ist, um den Stator 5 axial in die Passung und aus der Passung zu bewegen.

Der Zentriereingriff besteht zwischen einem Zentrier-Außenumfang 8 der Stator-Zentrierstruktur 7 und einem Zentrier-Innenumfang der Gehäusestruktur 10, der den Zentrier-Außenumfang 8 in enger Passung einfasst. Um den Gehäuse-Zentrierabschnitt 13 mit seinem Zentrier-Innenumfang zu bilden, verengt sich der Innenumfang der Gehäusestruktur 10 und somit der Motorraum von einem der Motorraum-Öffnung 11 nahen, in Bezug auf die Montagerichtung beim Zusammenbau aufwärtigen Motorraum-Abschnitt 12 auf den Gehäuse-Zentrierabschnitt 13. Die Verengung erfolgt über eine axial kurze, radial flache Rampe.

Die Verengung auf den Gehäuse-Zentrierabschnitt 13, vorzugsweise in Form einer Rampe, kann beispielsweise so lang wie der Gehäuse-Zentrierabschnitt 13 sein, bevorzugter ist sie jedoch kürzer als der Gehäuse-Zentrierabschnitt 13 und ist näherungsweise stufenartig. Der Gehäuse-Zentrierabschnitt 13 kann beispielsweise mehr als doppelt oder mehr als dreimal so lang wie die axiale Erstreckung der Verengung sein. Die axiale Erstreckung der Verengung ist vorteilhafterweise auch kürzer als die Länge des Zentriereingriffs. Der Zentriereingriff kann beispielsweise wenigstens um 50% länger als die Verengung sein.

Der Zentrier-Außenumfang 8 der Zentrierstruktur 7 und der damit in der Passung befindliche Zentrier-Innenumfang des Gehäuse-Zentrierabschnitts 13 sind vorzugsweise zylindrisch und können insbesondere kreiszylindrisch sein. Die Zentrierstruktur 7 kann über ihre gesamte axiale Länge einen zylindrischen, bevorzugt kreiszylindrischen Außenumfang aufweisen, der den Zentrier-Außenumfang 8 axial gerade verlängert. Der Gehäuse-Zentrierabschnitt 13 kann in axial gerader Verlängerung seines Zentrier-Innenumfangs zylindrisch, bevorzugt kreiszylindrisch, sein. Der Innenumfang des Motorraum-Abschnitts 12 ist vorzugsweise zylindrisch und kann insbesondere kreiszylindrisch sein. Eine andere zylindrische Querschnittsform, beispielsweise ein polygonaler oder abgeflacht ovaler Querschnitt, ist für den Innenumfang des Motorraum-Abschnitts 12 und/oder den Zentrier-Innenumfang des Gehäuse-Zentrierabschnitts 13 und an diesen angepasst für den Zentrier-Außenumfang 8 aber stattdessen auch realisierbar.

Das radiale Ausmaß der Verengung vom aufwärtigen Motorraum-Abschnitt 12 auf den Gehäuse-Zentrierabschnitt 13 kann sehr gering sein. Die Verengung erfüllt vorzugsweise nur die Funktion, im Motorraum eine definierte Zentrierung des Stators durch enge Passung zu schaffen. Der Motorraum-Abschnitt 12 ist im Bereich unmittelbar vor der Verengung auf den Gehäuse-Zentrierabschnitt 13 gerade so weit, dass der Stator 5 axial auf gerader Linie ohne Berührung der Gehäusestruktur 10 bis in die Überlappung mit dem Gehäuse-Zentrierabschnitt 13 bewegt werden kann. Eine größte Weite des Gehäuse-Zentrierabschnitts 13 kann beispielsweise wenigstens 90% oder wenigstens 95% oder wenigstens 97% einer größten Weite des Motorraum-Abschnitts 12 im Bereich unmittelbar vor der Verengung betragen.

Grundsätzlich kann oder können die Verengung auf den Gehäuse-Zentrierabschnitt 13 und/oder der Gehäuse-Zentrierabschnitt 13 selbst von mehreren nur lokal geformten Vorsprüngen gebildet werden, die um die Drehachse R verteilt und in Umfangsrichtung voneinander beabstandet sind, beispielsweise von mehreren axialen Rippen. Bevorzugter verengt sich der Innenumfang der Gehäusestruktur 10 und somit der Motorraum jedoch kontinuierlich und um die Drehachse R vollständig umlaufend auf den Gehäuse-Zentrierabschnitt 13. Der Innenumfang ist über die Länge des Gehäuse-Zentrierabschnitts 13 vorzugsweise um die Drehachse R umlaufend glatt.

Der Zentrier-Außenumfang 8 kann vorteilhafterweise ein Außenumfang eines Spulenkerns des Stators 5 sein. Im Ausführungsbeispiel ist der Zentrier-Außenumfang 8 ein der Motorraum-Öffnung 11 abgewandter Streifen des Außenumfangs des Spulenkerns, der sich von einem stirnseitigen Umfangsrand des Spulenkerns ein Stück weit in Richtung auf die Motorraum-Öffnung 11 erstreckt. Der Spulenkern ist axial mehr als dreimal oder mehr als viermal so breit wie dieser Umfangsstreifen, der den Zentrier-Außenumfang 8 bildet.

Der Stator 5 wird im Zentriereingriff, das heißt innerhalb der zentrierenden Passung von Stator-Zentrierstruktur 7 und Gehäuse-Zentrierabschnitt 13, bis gegen ein axiales Widerlager 21 geschoben. Der Pumpenraum-Deckel 20 bildet das Widerlager 21. Für den axialen Anschlagkontakt weist die Stator-Zentrierstruktur 7 an einer dem Pumpenraum zugewandten Stirnseite eine Anschlagfläche auf. Der Pumpenraum-Deckel 20 weist in Ausbildung des Widerlagers 21 eine der Stator-Zentrierstruktur 7 zugewandte Stirnfläche auf, an der die Stator-Zentrierstruktur 7 mit ihrer Anschlagfläche anliegt. Die Anschlagfläche der Stator-Zentrierstruktur 7 und/oder die damit im Anschlag kontaktbefindliche Gegenfläche des Widerlagers 21 kann oder können jeweils plane Radialflächen sein. Dies gilt insbesondere für die Anschlagfläche der Stator-Zentrierstruktur 7. Der Anschlagkontakt kann um die Drehachse R vollständig und kontinuierlich umlaufend bestehen, vorteilhafter ist es jedoch, wenn der Anschlagkontakt lokal begrenzt nur an mehreren Stellen um die Drehachse R verteilt besteht, wobei die Kontaktstellen so verteilt sind, dass auch dieser Anschlagkontakt Kippbewegungen des Stators 5 entgegenwirkt, bevorzugt verhindert, wenn die Stator-Zentrierstruktur 7 in der zentrierenden Passung in einem losen Anschlagkontakt am Widerlager 21 anliegt.

Der Stator 5 weist um die Drehachse R verteilt mehrere nach radial außen vorragende Zentriernocken 7 auf, die gemeinsam die Stator-Zentrierstruktur 7 bilden. Die Zentriernocken 7 sind in den Figuren 2 und 3 gut erkennbar. Die Zentriernocken 7 bilden gemeinsam mit ihrem Außenumfang den Zentrier-Außenumfang 8 (Fig. 2) des Stators 5. Die in Fig. 2 verdeckten, rückwärtigen Stirnflächen der Zentriernocken 7 sind die Anschlagflächen des Stators 5 für den axialen Anschlagkontakt mit dem Widerlager 21. Aufgrund der Bereitstellung der Stator-Zentrierstruktur 7 in Form der mehreren diskreten Zentriernocken 7 wird bereits für den um die Drehachse R verteilt nur lokalen axialen Anschlagkontakt mit dem Widerlager 21 gesorgt.

Die Bereitstellung der in Umfangsrichtung voneinander beabstandeten und in diesem Sinne diskreten Zentriernocken 7 ist für die Zentrierung vorteilhaft, da Fehlstellungen des Stators 5 in Bezug auf die Zentrierung entgegenwirkt wird. Es wird auch die auf Passung herzustellende Umfangsfläche des Zentrier-Außenumfangs 8 reduziert. Die Zentriernocken 7 sind über den Umfang so verteilt, dass die Lage des Stators 5 durch den Zentriereingriff radial zur Drehachse R bestimmt ist.

Die Zentriernocken 7 oder mehrere Gruppen von Zentriernocken 7 können in gleichen Winkelabständen um die Drehachse R verteilt sein. Vorteilhaft ist, wenn die Stator-Zentrierstruktur 7 wenigstens drei, in Umfangsrichtung voneinander beabstandete Zentriernocken 7 umfasst.

Der Stator 5 ist im Motorraum durch einen Klemmeingriff axial fixiert. Im Klemmeingriff wird der Stator 5 mittels eines axialen Anschlags 31 axial gegen das Widerlager 21 gepresst. Der Anschlag 31 wirkt auf eine der Motorraum-Öffnung axial zugewandte Stirnfläche der Stator-Zentrierstruktur 7, im Ausführungsbeispiel also auf mehrere um die Drehachse R verteilte, voneinander beabstandete Stirnflächen der Zentriernocken 7. Die axiale Fixierung beruht allein auf einem Druckkontakt der Stator-Zentrierstruktur 7 mit dem Anschlag 31 und dem entgegenwirkend mit dem Widerlager 21.

Der Motorraum-Deckel 30 kann den Anschlag 31 bilden. Wenn der Motorraum-Deckel 30 den Anschlag 31 bildet, ist der Stator 5 mit der Montage des Motorraum-Deckels 30 axial fixiert, das heißt relativ zur Gehäusestruktur 10 axial unbeweglich festgelegt. Eine axiale Fixierung ausschließlich durch Klemmung zwischen unmittelbar den Deckeln 20 und 30 trägt zur Vereinfachung der Gehäusestruktur 10 bei. Die Gehäusestruktur 10 stellt mit der Gehäuse-Stirnwand 15 das axiale Widerlager für den Pumpenraum-Deckel 20 bereit. Auf die Formung eines Widerlagers eigens für den Stator 5, zusätzlich zur Gehäuse-Stirnwand 15, kann auf Seiten der Gehäusestruktur 10 verzichtet werden.

Die Stator-Zentrierstruktur 7 erfüllt noch eine weitere Funktion, indem sie im Zusammenwirken mit einer in den Figuren 2, 3 und 4 erkennbaren Positionierstruktur 22 eine Drehwinkelposition für den Stator 5 definiert. Die Positionierstruktur 22 ragt vom Pumpenraum-Deckel 20 in den Motorraum. Im Ausführungsbeispiel durchragt sie den Pumpenraum-Deckel 20 und ragt von diesem axial in eine Vertiefung der Gehäusestruktur 10, beispielhaft der Gehäuse-Stirnwand 15. Die Positionierstruktur 22 bestimmt somit auch die Drehwinkelposition des Pumpenraum-Deckels 20 relativ zur Gehäusestruktur 10. Im zusammengebauten Zustand ragt die Positionierstruktur 22 in eine axiale Überlappung mit der Stator-Zentrierstruktur 7. Im Positioniereingriff, der in den Fig. 3 und 4 erkennbar ist, ragt die Positionierstruktur 22 in eine Lücke, die zwischen zwei benachbarten Zentriernocken 7 in Umfangsrichtung mit einer an die Positionierstruktur 22 angepassten, in Umfangsrichtung gemessenen Weite verbleibt. Die Positionierstruktur 22 kann beispielsweise stiftförmig sein.

Die Stator-Zentrierstruktur 7 weist über den Umfang des Stators 5 verteilt mehrere Gruppen, vorzugsweise drei Gruppen, von jeweils zwei Zentriernocken 7 auf. Dies ist in den Figuren 2 und 3 erkennbar. Die zwei Zentriernocken 7 der jeweiligen Gruppe sind in Umfangsrichtung durch jeweils eine Lücke voneinander getrennt, deren Weite in Anpassung an die Positionierstruktur 22 gewählt ist, während zwischen den Zentriernocken 7 benachbarter Gruppen in Umfangsrichtung jeweils eine demgegenüber in Umfangsrichtung weitere Lücke verbleibt. Die Gruppen der Zentriernocken 7 sind in gleichen Winkelabständen über den Umfang verteilt. Durch die Bereitstellung der Stator-Zentrierstruktur 7 durch drei um die Drehachse R zueinander im gleichen Winkelabstand geformte Zentriernocken 7 wird die Zentrierung optimiert. Ferner kann der Stator 5 den Wechselstromphasen entsprechend in drei unterschiedlichen Drehwinkelpositionen relativ zur Gehäusestruktur 10 positioniert werden.

Die Gehäusestruktur 10 weist im Bereich des Motorraums einen weiteren Gehäuse-Zentrierabschnitt 14 auf. Der weitere Gehäuse-Zentrierabschnitt 14 dient der Zentrierung des Pumpenraum-Deckels 20 in Bezug auf die Drehachse R. Der Motorraum verengt sich vom Gehäuse-Zentrierabschnitt 13 auf den weiteren Gehäuse-Zentrierabschnitt 14, wobei die Verengung insbesondere rampenförmig sein kann.

Die Verengung auf den weiteren, in Montagerichtung abwärtigen Gehäuse-Zentrierabschnitt 14, vorzugsweise in Form einer Rampe, kann beispielsweise so lang wie der abwärtige Gehäuse-Zentrierabschnitt 14 sein, bevorzugter ist sie jedoch kürzer als der Gehäuse-Zentrierabschnitt 14 und ist zumindest näherungsweise stufenförmig. Der Gehäuse-Zentrierabschnitt 14 kann beispielsweise mehr als doppelt oder mehr als dreimal so lang wie die axiale Erstreckung dieser abwärtigen Verengung sein. Die axiale Erstreckung der abwärtigen Verengung ist vorteilhafterweise kürzer als die Länge des Zentriereingriffs von Pumpenraum-Deckel 20 und Gehäuse-Zentrierabschnitt 14. Der Zentriereingriff kann beispielsweise wenigstens um 50% länger als die abwärtige Verengung sein.

Der Innenumfang des abwärtigen Gehäuse-Zentrierabschnitts 14 ist vorzugsweise zylindrisch und kann insbesondere kreiszylindrisch sein. Andere zylindrische Querschnittsformen, beispielsweise ein polygonaler oder abgeflacht ovaler Querschnitt, ist für den Gehäuse-Zentrierabschnitt 14 aber stattdessen auch realisierbar.

Das radiale Ausmaß der Verengung vom Gehäuse-Zentrierabschnitt 13 auf den abwärtigen Gehäuse-Zentrierabschnitt 14 kann sehr gering sein. Die Verengung erfüllt vorzugsweise nur die Funktion, im Motorraum eine Zentrierung für den Pumpenraum-Deckel 20 zu schaffen. Der Gehäuse-Zentrierabschnitt 13 kann radial beispielsweise gerade so weit sein, dass der Pumpenraum-Deckel 20 axial auf gerader Linie ohne Berührung der Gehäusestruktur 10 bis in die Überlappung mit dem Gehäuse-Zentrierabschnitt 14 bewegt werden kann. Eine größte Weite des abwärtigen Gehäuse-Zentrierabschnitts 14 kann beispielsweise wenigstens 90% oder wenigstens 95% oder wenigstens 97% einer größten Weite des Gehäuse-Zentrierabschnitts 13 betragen.

Grundsätzlich kann oder können die Verengung auf den abwärtigen Gehäuse-Zentrierabschnitt 14 und/oder der Gehäuse-Zentrierabschnitt 14 selbst von mehreren nur lokal geformten Vorsprüngen gebildet werden, die um die Drehachse R verteilt und in Umfangsrichtung voneinander beabstandet sind, beispielsweise von mehreren axialen Rippen. Bevorzugter verengt sich der Innenumfang der Gehäusestruktur 10 und somit der Motorraum jedoch kontinuierlich und um die Drehachse R vollständig umlaufend auf den Gehäuse-Zentrierabschnitt 14. Der Innenumfang der Gehäusestruktur 10 ist über die Länge des abwärtigen Gehäuse-Zentrierabschnitts 14 vorzugsweise um die Drehachse R umlaufend glatt.

An seinem der Motorraum-Öffnung 11 nahen anderen Ende weitet sich der Motorraum auf, um einen geringfügig erweiterten Einlassabschnitt zu bilden. Der Einlassabschnitt umgibt mit seinem freien axialen Ende die Motorraum-Öffnung 11. Wie in Fig. 5 erkennbar, ragt der Motorraum-Deckel 30 mit seiner inneren Umfangswand 33 in den bezüglich der Montagerichtung aufwärtigen Motorraum-Abschnitt 12. Der Motorraum ist im Bereich des Einlassabschnitts mittels einer die innere Umfangswand 33 des Motorraum-Deckels 30 umgebenden Radialdichtung 35 zur äußeren Umgebung der Pumpe-Motor-Einheit abgedichtet. Die innere Umfangswand 33 durchragt den Einlassabschnitt und ragt in den dahinter liegenden Teil des Motorraum-Abschnitts 12 hinein, endet aber mit ihrem Anschlag 31 axial ein Stück weit vor dem Gehäuse-Zentrierabschnitt 13.

Der Pumpenraum und der Motorraum, wie bevorzugt auch der Elektronikraum, sind axial längs der Drehachse R hintereinander und bezüglich der Montage- und Drehachse R koaxial zueinander angeordnet. Der Pumpenraum-Deckel 20 ist vollständig in der Gehäusestruktur 20 aufgenommen und liegt an der einen Zwischenboden der Gehäusestruktur 10 bildenden Gehäuse-Stirnwand 15 axial an.

Der elektrische Antriebsmotor 4, 5 ist als Nassläufer ausgeführt. Der Motorraum ist mit dem Pumpenraum verbunden. Die Verbindung kann beispielsweise über das vom Pumpenraum-Deckel 20 gebildete Drehgleitlager und/oder über einen Verbindungskanal verwirklicht sein, der sich durch den Pumpenraum-Deckel 20 erstreckt. Das von der Pumpe geförderte Fluid dient somit als Kühlmittel für den elektrischen Antriebsmotor 4, 5.

Der Motorraum-Deckel 30 trennt den Elektronikraum vom Motorraum. Durch den Motorraum-Deckel 30 können Leitungen geführt sein, die den Antriebsmotor, hier den Stator 5, zur Steuerung und/oder Regelung und Versorgung mit elektrischer Energie mit der Steuerungselektronik 38 verbinden. Bevorzugt wird der Elektronikraum mittels des Motorraum-Deckels 30 gegen den Motorraum abgedichtet, um Fluideintritt in den Elektronikraum zu verhindern.

Die Gehäusestruktur 10 kann in einem Verfahren der Urformung, beispielsweise durch Gießen oder generativ, hergestellt sein. Grundsätzlich kann sie stattdessen aber auch aus mehreren separat geformten Teilen gefügt sein.

Die Gehäusestruktur 10 weist nebeneinander den Pumpenraum-Abschnitt 16, mit dem sie den Pumpenraum umgibt, und hieran axial anschließend einen Motorraum-Abschnitt auf. Der Pumpenraum-Boden 17 und der vom Pumpenraum-Boden 17 umfänglich axial vorragende Pumpenraum-Abschnitt 16 bilden einen ersten topfförmigen Axialabschnitt der Gehäusestruktur 10. Die Gehäusestruktur 10 weitet sich vom Pumpenraum-Abschnitt 16 zum Motorraum radial unter Ausbildung der Gehäuse-Stirnwand 15 auf. Die Gehäuse-Stirnwand 15 und die hiervon axial vorragende Umfangswand des Motorraums bilden einen zweiten topfförmigen Axialabschnitt der Gehäusestruktur 10. An seinem von der Gehäuse-Stirnwand 15 axial abgewandten Ende läuft der zweite Axialabschnitt unter Ausbildung der Motorraum-Öffnung 11 offen aus.

Der Motorraum-Abschnitt umfasst von der Motorraum-Öffnung 11 ausgehend den aufwärtigen Motorraum-Abschnitt 12, über die Verengung axial angrenzend den Gehäuse-Zentrierabschnitt 13 für den Stator 5 und hieran über die abwärtige Verengung angrenzend den abwärtigen Gehäuse-Zentrierabschnitt 14 für den Pumpenraum-Deckel 20. Der aufwärtige Motorraum-Abschnitt 12 weist seinerseits den Einlassabschnitt, der an seinem aufwärtigen Ende die Motorraum-Öffnung 11 bildet, und hieran über eine aufwärtige Verengung angrenzend einen zweiten Motorraum-Abschnitt auf, der sich am abwärtigen Ende auf den Gehäuse-Zentrierabschnitt 13 für den Stator 5 verengt. Der abwärtige Gehäuse-Zentrierabschnitt 14 geht in die Gehäuse-Stirnwand 15 über, das heißt die Gehäuse-Stirnwand 15 schließt unmittelbar an den Gehäuse-Zentrierabschnitt 14 an. Axial auf der Höhe der Gehäuse-Stirnwand 15 öffnet sich der Pumpenraum in den Motorraum.

Ein besonders vorteilhaftes Merkmal der Gehäusestruktur 10 ist, dass sie sich in Montagerichtung, von der Motorraum-Öffnung 11 axial in Richtung auf den Pumpenraum und im Ausführungsbeispiel axial bis zum Pumpenraum-Boden 17, sukzessive jeweils stufenförmig verengt. Die jeweilige Verengung erfolgt vorteilhafterweise über den gesamten Umfang, das heißt über 360° um Drehachse R vollständig und kontinuierlich umlaufend. Die aufwärtige Verengung vom Einlassabschnitt auf den demgegenüber verengten Restabschnitt des aufwärtigen Motorraum-Abschnitts 12 und/oder die Verengung vom aufwärtigen Motorraum-Abschnitt 12 auf den Gehäuse-Zentrierabschnitt 13 und/oder die abwärtige Verengung auf den weiteren Gehäuse-Zentrierabschnitt 14 kann jeweils insbesondere rampenförmig sein, wobei die jeweilige rampenförmige Verengung in vorteilhaften Ausführungen nur über eine kurze axiale Länge und somit quasi stufenförmig erfolgt. Über die Gehäuse-Stirnwand 15 verengt sich der von der Gehäusestruktur 10 umgebene Innenraum schließlich vom Motorraum auf den demgegenüber engeren Pumpenraum.

Der Aufbau der Pumpe-Motor-Einheit und die Form der Gehäusestruktur 10 ermöglichen eine einfache, dennoch präzise Montage ihrer Komponenten. Eine effiziente Montage kann die folgenden Schritte umfassen:
In einem ersten Schritt wird der Pumpenraum-Deckel 20 auf die Antriebswelle 3 geschoben. Die Antriebswelle 3 ist bereits mit dem Rotor 4 drehunbeweglich gefügt. Anschließend wird das Förderrad 1 mit der Antriebswelle 3 gefügt, sodass das Förderrad 1 und der Rotor 4 jeweils drehunbeweglich mit der Antriebswelle 3 verbunden sind und der Pumpenraum-Deckel 20 zwischen dem Förderrad 1 und dem Rotor 4 angeordnet ist.

In einem zweiten Schritt wird das Förderrad 2 durch die Motorraum-Öffnung 11 und den Motorraum bewegt und in den Pumpenraum eingesetzt. Anschließend wird die Baugruppe aus Förderrad 1, Antriebswelle 3, Rotor 4 und Pumpenraum-Deckel 20 in Montagerichtung durch die Motorraum-Öffnung 11 eingesetzt, sodass das Förderrad 1 mit dem Förderrad 2 in den Zahneingriff gelangt und der Pumpenraum-Deckel 20 an der Gehäuse-Stirnwand 15 anliegt. Beim Einsetzen zentriert sich der Pumpenraum-Deckel 20 am zugeordneten Gehäuse-Zentrierabschnitt 14. Wie in Fig. 4 erkennbar, wird die Drehwinkelposition des Pumpenraum-Deckels 20 mittels der Positionierstruktur 22 bestimmt, sodass der Pumpenraum-Deckel 20 in der so vorgegebenen Drehwinkelposition an der Gehäuse-Stirnwand 15 axial anliegt oder zumindest zentriert axial davor liegt.

In einem dritten Schritt wird der Stator 5 über die Motorraum-Öffnung 11 in Montagerichtung eingeführt. Bei dem axialen Einführen gelangt die Stator-Zentrierstruktur 7 in den Positioniereingriff mit der Positionierstruktur 22 und in den Zentriereingriff mit dem zugeordneten Gehäuse-Zentrierabschnitt 13. Der in Bezug auf die Drehachse R zentrierte und in Bezug auf die Drehwinkelposition positionierte Stator 5 wird axial in Anlage am Pumpenraum-Deckel 20, nämlich an dessen Widerlager 21 gebracht.

In einem vierten Schritt wird die Motorraum-Öffnung 11 mittels des Motorraum-Deckels 30 verschlossen. Dabei wird der Motorraum-Deckel 30 so positioniert, dass seine innere Umfangswand 33 mit ihrem vorderen Ende, dem Anschlag 31, der Stator-Zentrierstruktur 7 axial unmittelbar gegenüberliegt und vorzugsweise auch bereits Axialkontakt mit der Stator-Zentrierstruktur 7 hat. Die Dichtung 35 befindet sich jetzt zweckmäßigerweise im Dichtkontakt mit der Gehäusestruktur 10 und dichtet den Motorraum ab.

In einem fünften Schritt kann der Motorraum-Deckel 30 mit der Gehäuse-Struktur 10 gefügt, vorzugsweise verspannt werden. Die Fügeverbindung ist so gewählt, dass der Motorraum-Deckel 30 mit seinem Anschlag 31 mit einer gewissen Presskraft gegen die Stator-Zentrierstruktur 7 gedrückt wird, um den Stator 5 mit axialer Klemmkraft zwischen dem Anschlag 31 und dem Widerlager 21 des Pumpenraum-Deckels 20 zu fixieren. Zweckmäßigerweise wird der Motorraum-Deckel 30 mittels einer Schraubverbindung mit der Gehäusestruktur 10 gefügt. Die Befestigungsmittel 37 sind in derartigen Ausführungen Schraubbefestigungsmittel.

In einem sechsten Schritt wird die Steuerungseinrichtung 38 an der Außenseite des Deckelbodens 32 des Motorraum-Deckels 30 angeordnet. Dieser Schritt beinhaltet die Herstellung der elektrischen Verbindung der Steuerungseinrichtung 38 mit dem Stator 5 und kann die vorherige Anordnung eines Wärmeleitpads 36 oder einer Wärmeleitpaste 36 auf dem Deckelboden 32 oder auf einer dem Deckelboden 32 zugewandten Stirnfläche der Steuerungseinrichtung 38 beinhalten.

In einem siebten Schritt wird der Elektronikdeckel 40 am Motorraum-Deckel 30 angebracht und mit diesem gefügt, beispielsweise mittels Befestigungsmitteln 42, wie etwa Schraubverbindungsmitteln.

Der Einlassabschnitt der Gehäusestruktur 10 kann nicht nur im Zusammenwirken mit dem Motorraum-Deckel 30 der Abdichtung des Motorraums dienen, sondern auch eine erste Positionier- und/oder Führungsfunktion für die nacheinander einzusetzenden Komponenten erfüllen. Der sich anschließende, verengte Teil des Motorraum-Abschnitts 12 kann der demgegenüber radial genaueren Positionierung und Führung des Pumpenraum-Deckels 20 und/oder des Stators 5 dienen, die sozusagen exakter vorzentriert werden können, wenn sie innerhalb des Abschnitts 12 weiterbewegt werden. Der Gehäuse-Zentrierabschnitt 13 kann für eine noch genauere Vorzentrierung des Pumpenraum-Deckels 20 genutzt werden. Die jeweilige Verengung verbessert bei Formung als Rampe die Vorzentrierung weiter.

Die Fügeverbindung von Gehäusestruktur 10 und Motoraum-Deckel 30 ist vorzugsweise lösbar. Die Fügeverbindung von Motorraum-Deckel 30 und Elektronikdeckel 40 ist vorzugsweise lösbar. Diese beiden Fügeverbindungen sind in vorteilhaften Ausführungen so gewählt, dass wahlweise die eine oder die andere gelöst werden kann und es zum Lösen des Motorraum-Deckels 30 nicht erforderlich ist, zuvor den Elektronikdeckel 40 abzunehmen. Besonders vorteilhaft sind der axial geschachtelte Aufbau und der Zusammenbau zur Pumpe-Motor-Einheit ohne Stoffschlussverbindung. Dies erspart langwierige Montageschritte zusätzlich zum Zusammensetzen der Komponenten und ermöglicht grundsätzlich auch eine einfache Demontage.

### Bezugszeichen:

| | | | |
|---|---|---|---|
| 1 | Förderrad | 34 | Umfangswand |
| 2 | Förderrad | 35 | Dichtung |
| 3 | Antriebswelle | 36 | Dichtung |
| 4 | Rotor | 37 | Befestigungsmittel |
| 5 | Stator | 38 | Steuerungseinrichtung |
| 6 | Spulen | 39 | - |
| 7 | Stator-Zentrierstruktur | 40 | Elektronikdeckel |
| 8 | Zentrier-Außenumfang | 41 | Dichtung |
| 9 | Dichtung | 42 | Befestigungsmittel |
| 10 | Gehäusestruktur | | |
| 11 | Motorgehäuse-Öffnung | R | Drehachse |
| 12 | Motorraum-Abschnitt | | |
| 13 | Gehäuse-Zentrierabschnitt | | |
| 14 | Gehäuse-Zentrierabschnitt | | |
| 15 | Gehäuse-Stirnwand | | |
| 16 | Pumpenraum-Abschnitt | | |
| 17 | Pumpenraum-Boden | | |
| 18 | Niederdruckkanal | | |
| 19 | Hochdruckkanal | | |
| 20 | Pumpenraum-Deckel | | |
| 21 | Widerlager | | |
| 22 | Positionierstruktur | | |
| 23 | - | | |
| 24 | - | | |
| 25 | - | | |
| 26 | - | | |
| 27 | - | | |
| 28 | Montageflansch | | |
| 29 | Dichtungsnut | | |
| 30 | Motorraum-Deckel | | |
| 31 | Anschlag | | |
| 32 | Deckelboden | | |
| 33 | Umfangswand | | |

## Patentansprüche

1. Pumpe-Motor-Einheit, die Folgendes umfasst:
1.1 eine Gehäusestruktur (10), die einen Pumpenraum und einen in axialer Flucht zum Pumpenraum gelegenen Motorraum umgibt,
1.2 ein im Pumpenraum drehbares Förderrad (1) zur Förderung eines Fluids,
1.3 einen im Motorraum aufgenommenen elektrischen Antriebsmotor (4, 5), der einen um eine Drehachse (R) drehbaren Rotor (4) und einen Stator (5) mit einer Stator-Zentrierstruktur (7) umfasst, wobei der Rotor (4) und/oder der Stator (5) elektrische Spulen (6) und einen die Spulen (6) durchragenden Spulenkern aufweist oder jeweils aufweisen, und
1.4 eine Antriebswelle (3), die das Förderrad (1) für einen Drehantrieb mit dem Rotor (4) koppelt, wobei
1.5 die Gehäusestruktur (10) einen den Pumpenraum radial begrenzenden Pumpenraum-Abschnitt (16), einen den Motorraum radial begrenzenden Motorraum-Abschnitt (12), axial zwischen dem Pumpenraum-Abschnitt (16) und dem Motorraum-Abschnitt (12) einen den Motorraum radial begrenzenden Gehäuse-Zentrierabschnitt (13) und an einer Stirnseite eine Motorraum-Öffnung (11) aufweist, durch die der Rotor (4) und der Stator (5) beim Zusammenbau der Einheit axial in den Motorraum einführbar sind,
1.6 der Gehäuse-Zentrierabschnitt (13) und der Motorraum-Abschnitt (12) den Stator (5) umgeben und der Gehäuse-Zentrierabschnitt (13) mit der Stator-Zentrierstruktur (7) axial überlappt,
1.7 der Motorraum sich vom Motorraum-Abschnitt (12) auf den Gehäuse-Zentrierabschnitt (13) verengt, vorzugsweise rampenförmig, und wobei
1.8 der Gehäuse-Zentrierabschnitt (13) die Stator-Zentrierstruktur (7) in einem Zentriereingriff mit Passung umgibt, so dass der Stator (5) im Zusammenwirken von Stator-Zentrierstruktur (7) und Gehäuse-Zentrierabschnitt (13) in Bezug auf die Drehachse (R) zentriert wird, **dadurch gekennzeichnet, dass**
1.9 die Pumpe-Motor-Einheit einen in die Gehäusestruktur (10) eingesetzten Pumpenraum-Deckel (20) umfasst, der eine Stirnwand des Pumpenraums und optional auch eine Stirnwand des Motorraums bildet, wobei die Gehäusestruktur (10) eine Gehäuse-Stirnwand (15) und eine von der Gehäuse-Stirnwand (15) vorragende Gehäuse-Umfangswand aufweist, die den Motorraum-Abschnitt (12), den Gehäuse-Zentrierabschnitt (13) und axial zwischen dem Gehäuse-Zentrierabschnitt (13) und der Gehäuse-Stirnwand (15) einen weiteren Gehäuse-Zentrierabschnitt (14) bildet, wobei sich der Motorraum in Richtung auf die Gehäuse-Stirnwand (15) auf den weiteren Gehäuse-Zentrierabschnitt (14) verengt, vorzugsweise rampenförmig, und wobei der weitere Gehäuse-Zentrierabschnitt (14) den Pumpenraum-Deckel (20) mit Passung umgibt, so dass der Pumpenraum-Deckel (20) im Zusammenwirken mit dem weiteren Gehäuse-Zentrierabschnitt (14) in Bezug auf die Drehachse (R) zentriert wird, wobei der Pumpenraum-Deckel (20) vorzugsweise an der Gehäuse-Stirnwand (15) axial anliegt.

2. Pumpe-Motor-Einheit nach dem vorhergehenden Anspruch, wobei die Stator-Zentrierstruktur (7) einen Zentrier-Außenumfang (8) hat, der zumindest einen Teil der Spulen (6) umgibt und in axialer Überlappung mit den Spulen (6) vom Gehäuse-Zentrierabschnitt (13) in der Passung zentrierend eingefasst wird, wobei der in der Passung eingefasste Zentrier-Außenumfang (8) vorzugsweise der größte Außenumfang des Stators (5) ist.

3. Pumpe-Motor-Einheit nach einem der vorhergehenden Ansprüche, wobei der Stator (5) mehrere Zentriernocken (7) umfasst, die in Umfangsrichtung voneinander beabstandet sind und in axialer Überlappung mit den Spulen (6) nach radial außen vorragen und gemeinsam die Stator-Zentrierstruktur (7) bilden.

4. Pumpe-Motor-Einheit nach einem der vorhergehenden Ansprüche, wobei sich der Pumpenraum axial in den Motorraum öffnet und das Förderrad (1) durch die Motorraum-Öffnung (11) und den Motorraum in den Pumpenraum eingeführt werden kann, vorzugsweise auf axial geradem Weg.

5. Pumpe-Motor-Einheit nach einem der vorhergehenden Ansprüche, wobei die Gehäusestruktur (10) an einer von der Motorraum-Öffnung (11) axial fernen Rückseite einen Pumpenraum-Boden (17) aufweist, der den Pumpenraum axial begrenzt.

6. Pumpe-Motor-Einheit nach einem der vorhergehenden Ansprüche, wobei der Pumpenraum eine Förderkammer umfasst, in der das Förderrad (1) drehbar aufgenommen ist, und das Gehäuse einen mit der Förderkammer verbundenen Niederdruckkanal (18) und einen mit der Förderkammer verbundenen Hochdruckkanal (19) umfasst, um bei Drehantrieb des Förderrads (1) ein Fluid vom Niederdruckkanal (18) zum Hochdruckkanal (19) zu fördern, und wobei der Niederdruckkanal (18) und/oder der Hochdruckkanal (19) an einer der Motorraum-Öffnung (11) axial abgewandten Rückseite des Gehäuses, vorzugsweise des Pumpenraum-Bodens (17) des vorhergehenden Anspruchs, unter Ausbildung eines Niederdruckanschlusses und/oder eines Hochdruckanschlusses mündet oder münden.

7. Pumpe-Motor-Einheit nach einem der vorhergehenden Ansprüche, die einen in die Gehäusestruktur (10) eingesetzten Pumpenraum-Deckel (20) umfasst, der eine Stirnwand des Pumpenraums und optional auch eine Stirnwand des Motorraums bildet, wobei die Gehäusestruktur (10) eine Gehäuse-Stirnwand (15) und eine von der Gehäuse-Stirnwand (15) vorragende Gehäuse-Umfangswand (12-14) aufweist, die den Motorraum-Abschnitt (12) und den Gehäuse-Zentrierabschnitt (13) aufweist und am Stirnende unter Ausbildung der Motorraum-Öffnung (11) ausläuft, wobei der Pumpenraum-Deckel (20) vorzugsweise an der Gehäuse-Stirnwand (15) axial anliegt.

8. Pumpe-Motor-Einheit nach einem der vorhergehenden Ansprüche, wobei die Gehäusestruktur (10) an einer von der Motorraum-Öffnung (11) axial fernen Rückseite einen Pumpenraum-Boden (17) umfasst und in die Gehäusestruktur (10) ein Pumpenraum-Deckel (20) axial zwischen der Motorraum-Öffnung (11) und dem Pumpenraum-Boden (17) eingesetzt ist, wobei der Pumpenraum-Boden (17) und der Pumpenraum-Deckel (20) den Pumpenraum an den zwei Stirnseiten begrenzen und die Antriebswelle (3) jeweils drehbar lagern.

9. Pumpe-Motor-Einheit nach einem der vorhergehenden Ansprüche, wobei der Stator (5) im Motorraum durch axialen Anschlagkontakt mittels axialer Klemmkraft kraftschlüssig gehalten wird, wobei die Klemmkraft vorzugsweise in die Stator-Zentrierstruktur (7) eingeleitet wird.

10. Pumpe-Motor-Einheit nach einem der vorhergehenden Ansprüche, wobei der Motorraum einen Motorraum-Deckel (30) umfasst, der die Motorraum-Öffnung (11) abdeckt und den Stator (5) axial gegen ein Widerlager (21) drückt und dadurch im Motorraum durch Anschlagkontakt axial klemmt.

11. Pumpe-Motor-Einheit nach einem der vorhergehenden Ansprüche, wobei in die Gehäusestruktur (10) ein Pumpenraum-Deckel (20) eingesetzt, axial zwischen dem Motorraum und dem Pumpenraum angeordnet und an der Gehäusestruktur (10) axial abgestützt ist, wobei der Pumpenraum-Deckel (20) für den Stator (5) ein axiales Widerlager (21) bildet, gegen das der Stator (5) axial gedrückt und dadurch geklemmt wird.

12. Pumpe-Motor-Einheit nach einem der vorhergehenden Ansprüche, wobei eine in Bezug auf die Gehäusestruktur (10) unbewegliche Positionierstruktur (22), vorzugsweise ein Positionierstift, mit der Stator-Zentrierstruktur (7) in einem Positioniereingriff ist und eine Drehwinkelposition des Stators (5) relativ zur Gehäusestruktur (10) durch den Positioniereingriff bestimmt wird.

13. Pumpe-Motor-Einheit nach einem der vorhergehenden Ansprüche, wobei die Passung von Gehäuse-Zentrierabschnitt (13) und Stator-Zentrierstruktur (7) eine Spielpassung mit höchstens geringem, vorzugsweise taktil nicht merklichem Spiel oder eine Übergangspassung ist und bei Ausführung als Überpassung so gewählt ist, dass der Stator (5) mit höchstens geringer Axialkraft in und aus der Passung bewegt werden kann.

14. Pumpe-Motor-Einheit nach einem der vorhergehenden Ansprüche, wobei die Stator-Zentrierstruktur (7) einen Zentrier-Außenumfang (8) und der Gehäuse-Zentrierabschnitt (13) einen Zentrier-Innenumfang aufweisen, der Zentrier-Innenumfang und der Zentrier-Außenumfang (8) einander axial mit der Passung überlappen und miteinander den Zentriereingriff bilden und sich der Zentriereingriff über eine axiale Länge von höchstens 10% oder höchstens 5% einer radialen Weite des Zentrier-Außenumfangs (8) und/oder weniger als 20% oder weniger als 10% einer axial über alles gemessenen Gesamtlänge des Stators (5) erstreckt.
